# EUROPEAN PATENT SPECIFICATION

(11) **EP 3 587 309 B1**
(45) Date of publication and mention of the grant of the patent: **03.09.2025**
(21) Application number: 19183713.7
(22) Date of filing: 01.07.2019
(51) Int. Cl.: B65G 21/16, B65G 21/22

(54) **BEND SEGMENT FOR A CONVEYOR OF ARTICLES**
BOGENSEGMENT FÜR EINEN FÖRDERER VON ARTIKELN
SEGMENT DE COUDE D'UN TRANSPORTEUR D'ARTICLES

(30) Priority: 29.06.2018 IT 201800006820
(43) Date of publication of application: 01.01.2020
(73) Proprietor: Rexnord Flattop Europe S.r.l., 42015 Correggio (RE) (IT)
(72) Inventor: Andreoli, Andrea, 41123 Modena (MO) (IT); Fiore, Antonio, 42018 San Martino in Rio (Reggio Emilia) (IT)
(74) Representative: V.O.

(56) References cited:
- EP-A1- 0 325 333
- EP-A1- 1 091 894
- EP-A1- 2 907 774
- EP-A1- 3 127 839
- EP-B1- 1 091 894
- DE-A1- 3 437 868
- JP-A- S5 874 479
- KR-B1- 100 982 558

## Description

### Technical sector of the invention

The invention generally relates to the field of conveyors of articles and their components, and in particularly to a bend segment for a conveyor of articles, such bend segment having at least one conveyor chain or mat guide track which curvedly extends for guiding a conveyor chain or mat of a conveyor of articles along a curve in a conveyor track.

### State of the Art

As it is known, the bend segments conveyor of articles are for example used for guiding one or a plurality of modular conveyor chains/mats (formed by a succession of modules or links hinged to each other) along curves in a conveyor track.

The bend segments may have a single guide track (for guiding a single conveyor chain or mat) or may have a plurality of (two or more) guide tracks (for guiding two or more conveyor chains or mats), and the length and radius of the curve may depend on the topology of the guide track.

In view of the great variety of the requested number of tracks, radiuses of curvature and lengths of the bend segments, a common solution consists in manufacturing a bend segment starting from a plate of a low friction and wear resistant plastic material, such as for example Ultra-High-Molecular-Weight PolyEthylene (UHMWPE), and milling the top part thereof in order to leave the guide rails of the chains or mats along the requested conveyor track.

EP 0 790 197 proposed to provide the plate of the starting material as a multilayered structure which comprises a top portion of a low friction and wear resistant material, and a lower portion of a low cost material, less noble and with a higher friction coefficient (thus, more subjected to wear).

Moreover, DE 8 901 563 proposed portions of the guide rails which are subjected to wear in the form of a bent strip of a low friction and wear resistant material. This strip may be radially supported by a base portion of a low quality material, and may be fixed thereto using screws.

EP 3 127 839, EP 0 325 333 and EP 1 091 894 relate to bend segments. In particular, EP1091894 discloses a bend segment according to the preamble of claim 1. DE 34 37 868 and KR 100 982 558 relate to straight segments.

### Presentation of the invention

Although the known solutions allow to save material and limiting the costs, they request substantially high costs for the assembly, the manufacturing of their parts, and the maintenance during time.

A purpose of the present invention is to provide a bend segment for a conveyor of articles, in which the costs for the material, for the manufacturing, for the assembly and also for the maintenance during time of the bend segment are low.

According to a first aspect of the present invention, it is provided a bend segment for a conveyor of articles according to claim 1.

The bend segment has at least one guide track extending bent for guiding a conveyor chain or mat along a curve.

The bend segment comprises a base portion and at least one pair of guide rails comprising a first guide rail and a second guide rail defining therebetween said at least one guide track, the first guide rail extending concentrically to said second guide rail and being more internal with respect to a center of curvature of the guide track.

At least the first guide rail comprises a respective lining profile applicable and applied to the base portion for defining the first guide rail.

The lining profile comprises first coupling means, male or female, and the base portion comprises, in correspondence of said first guide rail, second coupling means, respectively female or male, conjugate and adapted to cooperate with the first coupling means of the lining profile for forming, by pressure onto the lining profile against the base portion, a snap-fit coupling, said first and second coupling means being symmetrical with respect to a respective symmetry axis.

The respective lining profile may be removably applied to the base portion for defining the first guide rail. This way, assembly and/or disassembly of the respective lining profile from the base portion may be facilitated.

One of the first or second coupling means may comprise a receiving seat, wherein the receiving seat forms the female coupling means, in particular a female coupling element of a pair of coupling elements having conjugate male-female shapes, wherein the other of the first or second coupling means forms the male conjugate coupling means, in particular a male conjugating element of the pair of coupling elements. Preferably, side walls of the receiving seat may be flexible such that the side walls elastically flex and open outwardly to allow the male coupling element to penetrate in the receiving seat. This way, (dis)assembly may be further facilitated.

Additionally or alternatively, either said lining profile having said first female coupling means, or said base portion, in correspondence of said first guide rail, having said second female coupling means, may comprise wall elements defining a seat, said wall elements are flexible in such a way to elastically flex and enlarge an entering opening of said seat to allow said second or first male coupling means to be received into the seat.

In embodiments of the invention, the base portion and the lining profile are formed of a same material.

In other embodiments, the base portion is formed of a first material and the lining profile is formed of a second, different material, particularly a second material having a friction coefficient lower than that of the first material.

The second guide rail may be formed in a single piece with and of the same material as the base portion.

In other embodiments, also said second guide rail comprises a respective lining profile applicable to the base portion for defining, once it is applied to the base portion, the second guide rail. The lining profile of the second guide rail comprises first coupling means, male or female, and the base portion comprises, in correspondence of the second guide rail, second coupling means, respectively female or male, conjugate and adapted to cooperate with the first coupling means of the lining profile of the second guide rail for forming, by pressure onto the lining profile against the base portion, a snap-fit coupling, the first and second coupling means being symmetrical with respect to a respective symmetry axis.

The respective lining profile may be removably applied to the base portion for defining the second guide rail. This way, (dis)assembling of the respective lining profile from the base portion may be facilitated.

Analogous to the first guide element, also for the second guide element one of the first or second coupling means may comprise a receiving seat, wherein the receiving seat forms the female coupling means, in particular a female coupling element of a pair of coupling elements having conjugate male-female shapes, wherein the other of the first or second coupling means forms the male conjugate coupling means, in particular a male conjugating element of the pair of coupling elements. Preferably, side walls of the receiving seat may be flexible such that the side walls elastically flex and open outwardly to allow the male coupling element to penetrate in the receiving seat. This way, (dis)assembly may be further facilitated.

Additionally or alternatively, either said lining profile having said first female coupling means, or said base portion, in correspondence of said second guide rail, having said second female coupling means, may comprise wall elements defining a seat, said wall elements are flexible in such a way to elastically flex and enlarge an entering opening of said seat to allow said second or first male coupling means to be received into the seat.

The base portion comprises end buttresses at at least one of the ends of the at least one guide track; the end buttresses are adapted to stop in position the lining profile applied to the base portion preventing a sliding of the lining profile relative to the base portion.

The at least one guide track may comprise at least a first guide track and a second guide track, the second guide track being radially more external of the first guide track with respect to the center of curvature. The lining profile of the second guide rail of the first guide track may also form the lining profile of the first guide rail of the second guide track.

The first coupling means, male or female, of said lining profile may comprise at least one pair of shoulders symmetrical with respect to said symmetry axis formed in a seat or a pair of teeth symmetrical with respect to said symmetry axis, and the second coupling means, female or male, of the base portion, conjugate and adapted to cooperate with said first coupling means, may comprise at least one pair of teeth symmetrical with respect to said symmetry axis or a pair of shoulders symmetrical with respect to said symmetry axis.

The shoulders of the at least one pair of shoulders may face toward said symmetry axis.

Another aspect of the present invention relates to a method for assembling a bend segment.

The method comprises providing said base portion and said lining profile, and applying the lining profile to the base portion by:
- positioning the lining profile on the base portion in such a way that said first coupling means, male or female, of said lining profile is above said second coupling means, female or male, of the base portion;
- exerting a vertical pressure on the lining profile against the base portion, causing said wall elements to elastically flex and enlarge the entering opening of said seat for allowing said second or first male coupling means to penetrate into the seat.

### Brief description of the drawings

The features and advantages of the invention will become apparent from the reading of the following detailed description of exemplary and not limitative embodiments shown in the drawings. In the drawings:
Fig. 1 is axonometric view from above of a double guide track bend segment according to an embodiment of the present invention;
Fig. 2 is a view (zoomed with respect to Fig. 1) showing a (portion of a) base portion of the bend segment of Fig. 1;
Fig. 3 shows a (portion of a) guide rail lining of the bend segment of Fig. 1, disassembled from the bend segment of Fig. 2 of the bend segment;
Fig. 4 and Fig. 5 are views in cross section of the guide tracks of the bend segment of Fig. 1;
Fig. 6 is an axonometric view from above of a (portion of a) double guide track bend segment according to another embodiment of the present invention.
Fig. 7 shows a (portion of a) guide rail lining of the bend segment of Fig.6, disassembled from the respective base portion;
Fig. 8 and Fig. 9 are views in cross section of the guide tracks of the bend segment of Fig. 6;
Fig. 10 is an axonometric view from above of a (portion of a) double guide track bend segment according to a still another embodiment of the present invention;
Fig. 11 is a view showing a (portion of a) base portion of the bend segment of Fig. 10;
Fig. 12 and Fig. 13 show guide rail linings of the bend segment of fig. 10, disassembled from the base portion of Fig. 11 of the bend segment;
Fig. 14 is a cross section view of the guide tracks of the bend segment of Fig. 10;
Fig. 15 is a cross section view of the guide tracks of a bend segment according to another embodiment of the present invention, and
Fig. 16 and Fig. 17 show guide rail linings of the bend segment of Fig. 15, disassembled from the respective base portion of the bend segment.

### Detailed description of the exemplary embodiments of the invention

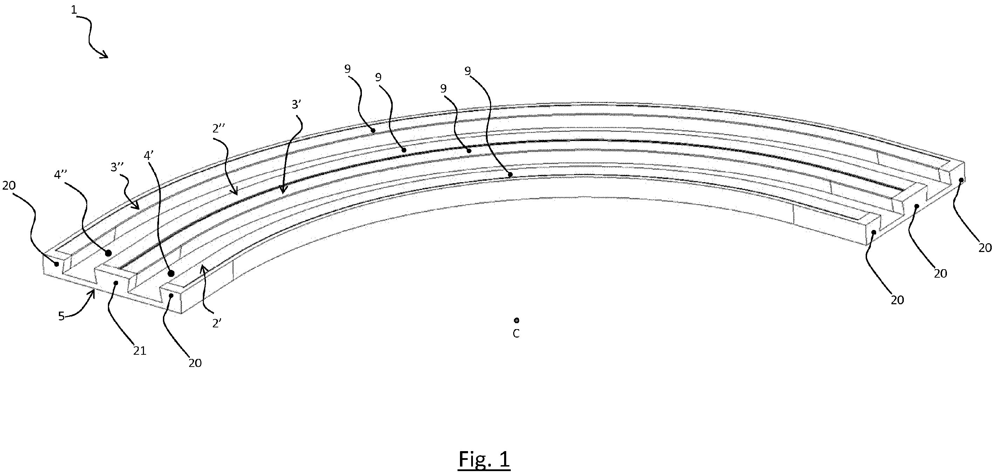

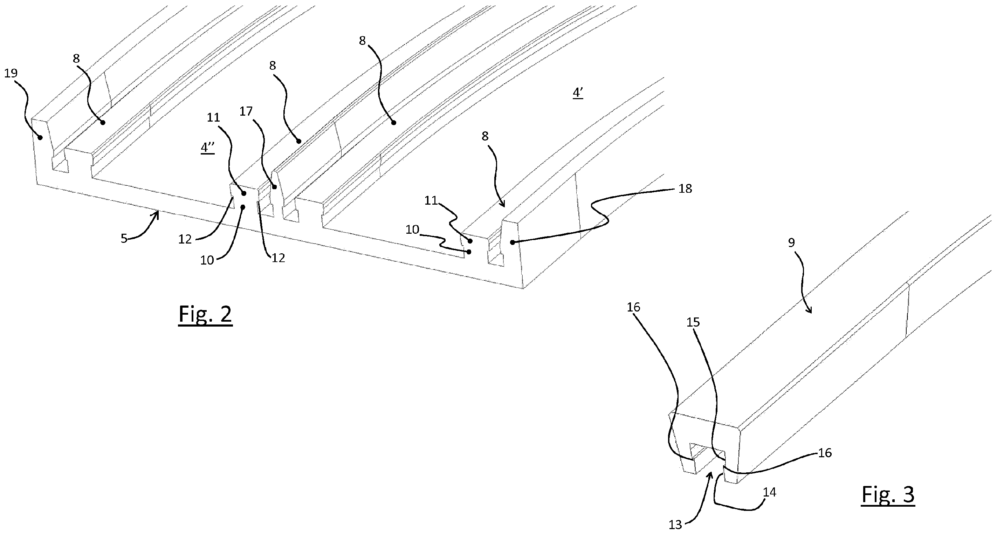

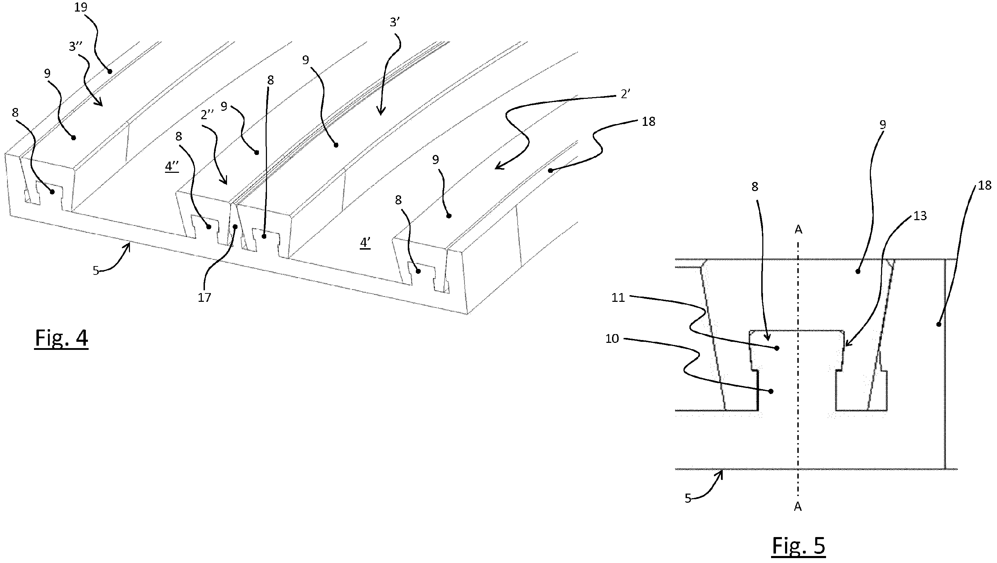

The figures from Fig. 1 to Fig. 5 refer to a double guide track bend segment 1 for a conveyor of articles, according to an embodiment of the present invention. It is underlined from now that the number of guide tracks of the bend segment is not a limitative feature for the present invention: the invention can be suitably applied also to, and also comprises, single guide track bend segments and bend segments having multiple (also more than two) guide tracks.

The bend segment 1 may be for example supported by a frame (not illustrated in the figures) of a conveyor of articles (for example a conveyor of beverage bottles), and can be connected to rectilinear guide portions or to further bend segments. The bend segment 1 could be also include rectilinear portions, for example at the beginning and at the end of the guide track, and could be include multiple curves (with different centers and radiuses of curvatures).

The bend segment 1 comprises a first pair of guide rails, said first pair of guide rails comprising respective first 2' and second 3' guide rails, and a second pair of guide rails, said second pair of guide rails comprising respective first 2" and second 3" guide rails.

The first and second guide rails 2', 3', 2", 3" extend concentrically along respective circumference arcs.

The first pair of guide rails 2' and 3' is more internal than the second pair of guider rails 2" and 3" compared to a center of curvature, schematized with C in Fig. 1, of the (concentric) guide tracks of the bend segment 1.

In the first pair of guide rails 2' and 3', the first guide rail 2' is more internal than the second guide rail 3' (with respect to the center of curvature C of the guide tracks). In the second pair of guide rails 2" and 3", the first guide rail 2" is more internal than the second guide rail 3" (with respect to the center of curvature C of the guide tracks).

Between the first 2' and second 3' guide rails of the first pair of guide rails, a first channel or groove 4' is defined; between the first 2" and second 3" guide rails of the second pair of guide rails, a second channel or groove 4" is defined. The second groove 4" extends along a circumferential arc that is concentric with respect to the circumference arc along which the first groove 4' extends, but more external than the center of curvature C of the guide tracks.

The bend segment 1 comprises a first component which makes up a base portion 5 of the bend segment 1.

Each one of the first and second guide rails 2', 3', 2", 3" comprises a respective rail portion 8 formed in a single piece with the base portion 5 of the bend segment 1 (for example, the rail portions 8 are formed by means of mechanical manufacturing with removal of material starting from a plate of material) and a respective lining profile (briefly, lining) 9 of the rail portion 8. The lining(s) 9 represent(s) a second component of the bend segment 1, distinct from the base portion 5. Both the rail portions 8, formed in a single piece with the base portion 5 of the bend segment 1, and the respective linings 9 mounted on the respective rail portions 8 extend along circumference arcs which are centered in the center of curvature C.

Each one of the rail portions 8 which are a single piece with the base portion 5 raises, substantially perpendicular, from the bottom wall of the respective groove 4', 4", said bottom wall being a wall of the base portion 5 that, in use, faces above and is exposed. The generic rail portion 8 has, in a cross section with respect to the conveyor track (section obtained with any vertical plane wherein a generic radius of the guide tracks lies), a generically "mushroom", "T" shape, with a symmetry vertical axis A - A (perpendicular to the bottom wall of the grooves 4', 4"), with a stem 10 and a head 11 having larger size with respect to the stem 10. Between the head 11 and the stem 10 a double shoulder 12 is provided, symmetrical with respect to the axis A - A, facing below. The double shoulder 12 creates a pair of teeth that are symmetric with respect to the axis A.

In each of the first and second guide rails 2', 2", 3', 3" the respective lining 9 can be removably applied to, coupled to, mounted on, the respective rail portion 8 which is a single piece with the base 5 of the bend segment 1. For this purpose, the lining 9 exhibits a receiving seat 13 of the rail portion 8. The seat 13 formed in the lining 9 constitutes a female coupling element of a pair of coupling elements having conjugate male-female shapes, wherein the rail portion 8 constitutes the male conjugating element.

The seat 13 provided in the lining 9, having a shape and size matching the shape and size of the rail portion 8 which is a single piece with the base 5, comprises a lower seat portion 14 having a cross section of size corresponding to the one of the stem 10 of the rail portion 8, and a upper seat portion 15 having a size corresponding to that of the head 11 of the rail portion 8 ("upper" and "lower" refer to the orientation of the components depicted in the figures, which in turn corresponds to the orientation of the components in their use). The lower seat portion 14 defines thus a narrowing of the seat 13 with respect to the upper seat portion 15, and between the lower seat portion 14 and the upper seat portion 15, two shoulders 16 are defined facing above and complementary to the shoulders 12 of the portion 8, thus symmetrical with respect to axis A - A. The shoulders 16 face toward the symmetrical axis A - A.

In the example shown in the figures from Fig. 1 to Fig. 5, the lining 9 is a profile having in cross sectional view a profile having a shape of an isosceles trapezoid having the larger base opposed to the entering opening of the seat 13, and therefore with the lateral walls (corresponding to the slanted sides of the trapezoid) that converge below (when the lining 9 is mounted on a respective rail portion 8).

Preferably, but not necessarily, the base portion 5 of the bend segment 1 comprises, between the rail portion 8 of the second guide rail 3' of the first pair of guide rails 2', 3' and the rail portion 8 of the first guide rail 2" of the second pair of guide rails 2", 3", a spacer 17 extending along a circumference arc which is centered on the center of curvature C. The spacer 17 has for example a wedge shape, which is complementary to the remaining interspace between the slanted walls of the two contiguous linings 9.

The spacer 17 is preferably formed in a single piece with the base portion 5, in the same way as for the rail portions 8. In case the bend segment 1 comprises more than two guide rails, more spacers similar to the spacer 17 may be provided between each second guide rail of a pair of guide rails and each first guide rail of a pair of guide rails radially adjacent and more external.

Preferably, but not necessarily, the base portion 5 of the bend segment 1 comprises, in a position which is radially internal to the first groove 4' and in a position which is radially external to the second groove 4", an inner end wall 18 and an external end wall 19 which vertically rise with respect to the bottom walls of the grooves 4', 4". In the more general case of bend segments with a single guide track or with more than two guide tracks, the inner end wall 18 and the external end wall 19 which vertically rise with respect to the bottom wall of the only groove or, respectively, of the groove which is radially more internal and of the groove which is radially more external of the bend segment 1. The inner end wall 18 and the external end wall 19 and the adjacent rail portions 8 delimit grooves (similar to the grooves delimited by the rail portions 8 and by the spacers 17) within which the (side walls of the) linings 9 are received. The inner surface of the inner end wall 18 and the inner surface of the external end wall 19 are, in cross section, slanted in such a way to be complementary with respect to the respective slanted side wall of the lining 9.

Advantageously, at the two ends (along the guide tracks) of the bend segment 1, the base portion 5 comprises end buttresses 20, 21 formed for example as end enlargements of the rail portions 8 and of the inner and external end walls 18 and 19. Particularly, a pair of end buttresses 20 is formed as an enlargement of the rail portion 8 which is radially more internal (corresponding to the first guide rail 2' of the first pair of guide rails 2', 3') and of the rail portion 8 which is radially more external (corresponding to the second guide rail 3" of the second pair of guide rails 2", 3") and of the inner and external end walls 18 and 19. An end buttress 21 is formed as an enlargement of the radially middle rail portions 8 (corresponding to the second guide rail 3' of the first pair of guide rails 2', 3' and to the first guide rail 2" of the second pair of guide rails 2", 3").

The base portion 5 may be realized by mechanical manufacturing with removal of material starting from a plate of material, for example a plate of plastic material. For example, the base portion 5 is formed by manufacturing a plate of a polyethylene material, such as for example a conventional polyethylene (PE) plate. The material constituting the base portion 5 may advantageously be a relatively lowly noble material, without particular requirements in terms of friction coefficient. The base portion 5 may be also realized by manufacturing a plate obtained starting from recycled materials having a polyethylene origin.

The linings 9 may be realized using the same material (for example, relatively lowly noble) with which the base portion 5 is formed. Alternatively, the lining 9 may be realized in a material that is different from the material with which the base portion 5 is realized. Particularly, the material with which the linings 9 are realized may be a material more noble with respect to the material forming the base portion 5, particularly a material having a lower friction coefficient with respect to the material forming the base portion 5 and therefore less subjected to wear. For example, the linings 9 may be formed of UHMWPE, preferably virgin UHMWPE, more preferably UHMWPE mixed with lubricant additives for the reduction of the friction coefficient.

The mounting of the linings 9 on the rail portions 8 is simply realized by exerting a sufficient vertical pressure on the linings 9 against the base portion 5. By positioning the lining 9 on the base portion 5 in such a way that the receiving seat 13 of the rail portion 8 is above a preselected one of the (four, in the considered example) rail portions 8 and exerting a sufficient vertical pressure, the side walls of the lining 9 elastically flex thereby slightly opening toward the outside and allow the head 11 of the rail portion 8 to penetrate in the seat 13, and when the head 11 of the rail portion 8 is received in the upper seat portion 15 of the seat 13, the side walls of the lining 9 close with a snap and the stem 10 of the rail portion 8 is received in the lower seat portion 14 of the seat 13. The rail portion 8 and the seat 13 of the lining 9 are tied by a shape coupling. The complementary shoulders 16 (of the seat 13 formed in the lining 9) and 12 (formed on the rail portion 8) guarantee that the lining 9 is kept in position on the respective rail portion 8, preventing that in use, as a consequence of the stresses caused by the conveyor chains or by the thermal dilations caused by friction, the lining 9 is removed from the respective rail portion for vertical sliding. Substantially, the shoulders 12 formed on the rail portion 8 act as teeth that, cooperating with the shoulders 16 formed in the seat 13 of the lining 9, keep the lining 9 in position.

The mounting of the linings 9 on the rail portions 8 may be realized in a simple way, manually, with bare hands or with the help of tools such as a simple hammer.

The disassembling of the linings 9 from the rail portions 8 is likewise very easy, being sufficient exerting on the lining 9 an uprising strength sufficient to remove the lining 9 from the respective rail portions 8. For this purpose, a tool can be employed such as a screwdriver, by inserting the tip thereof between the bottom wall of the groove 4' or 4" and the lower end of the lining 9, or by means of claws (by clawing a portion of the lining 9, preferably an end portion thereof, and exerting a traction toward above). Once a short section of the lining 9 is removed, the remaining lining 9 section can be easily detached, extracted from the rail portion 8 also with bare hands. That is to say, the respective lining profiles 9 are removably applied to the base portion 5, in particular the rail portions 8, for defining the respective first 2', 2" and/or second 3', 3" guide rails.

The bend segment 1 may drive two modular conveyor chains (not shown), in such a way that the consecutive chain links (modules) can be received in a respective groove 4' or 4". The bottom of the supporting plates of the articles conveyed by the modules (links) of the chains may rest on the (exposed) upper surfaces of the linings 9 of the first 2', 2" and second 3', 3" guide rails of the respective groove. When passing by the bend segment 1, the links of the chains are driven to slide along the respective groove 4', 4", being driven by the side walls of the first 2', 2" and second 3', 3" guide rails which delimit the groove 4', 4".

Particularly, in its passage along the groove 4' or 4", the conveyor chain, because of the traction it is subjected to (by the movement organs of the chain itself), mainly enters in a rubbing contact with the exposed side wall of the lining 9 of the first guide rail 2' or 2" of the respective pair of guide rails, rather than with the exposed side wall of the lining 9 of the second guide rail 3' or 3".

The vertical contact pressure (of the bottom of the support plates of the products of the modules or links of the conveyor chain) of the conveyor chain with the upper walls of the linings 9 is significantly lower than the contact pressure of the conveyor chain with the side walls of the linings 9 (indeed, said vertical contact pressure is due to the own weight of the conveyor chain and to the weight of the conveyed articles - for example, beverage bottles; the own weight of the transport chain is almost negligible, thus such vertical contact pressure is due almost entirely by the weight of the conveyed articles, which weight is however distributed on a relatively large surface).

Therefore, in use, the higher wear is experienced by the side wall of the lining 9 which defines the first guide rail of a guide track, like the first guide rail 2' or 2" of the first or second guide track of the bend segment 1.

Thanks to the fact that the linings 9 are (in cross section with respect to any vertical plane comprising a generic radius of the guide tracks) symmetrical with respect to a vertical axis (the previously mentioned axis A - A), when the wear of the side wall of the lining 9 defining the first guide rail (2' or 2") of a guide track appears to be excessive, it is possible to disassemble such lining 9 from the respective rail portion 8 and mounting it again overturned, in such a way that such side wall of the lining 9 that previously was not operative (not exposed to the conveyor chain), and therefore not wear out, becomes now the operative wall *(i.e.,* it becomes the exposed side wall of the lining 9). In this way, the operative life of every lining 9 is doubled. Moreover, (like the "tyre rotation swap" in a vehicle) it is possible to swap to each other the lining 9 defining the first guide rail (2' or 2") of conveyor track and the lining 9 defining the second guide rail (3' or 3") of the conveyor track (whose exposed side wall experiences however a lower wear, as explained above). In this way, the operative life of each lining 9 is further increased, almost quadrupled. The possibility of swapping and/or overturning the linings 9 may be also advantageously exploited for facing a temporary storage unavailability of new substitutive linings.

The simplicity and rapidity of the substitution operations of the linings 9 make possible to use linings 9 formed in a relatively lowly noble material (such as the one forming the base portion 5), having a relatively high friction coefficient and therefore more subjected to wear. Indeed, even if it was necessary to rapidly substitute the linings 9 because of their fast wear, the simplicity and the speed of the substitution operations makes this action a not problematic action.

The provision of the end buttresses 20, 21 in the base portion 5 of the bend segment 1 avoids that the linings 9, once mounted at the base portion 5 (on the respective rail portions 8 of the same), slide in the direction of the conveyor track, pulling out themselves. Preferably, the lining 9 have a length that is slightly lower (for example, of the 1%) with respect to the distance (measured along the circumference arcs described by the respective rail portions 8) between the end buttresses 20, 21, in such a way to take into account the thermal expansion the linings 9 exhibit during the use of the bend segment 1 (due to the friction with the conveyor chain).

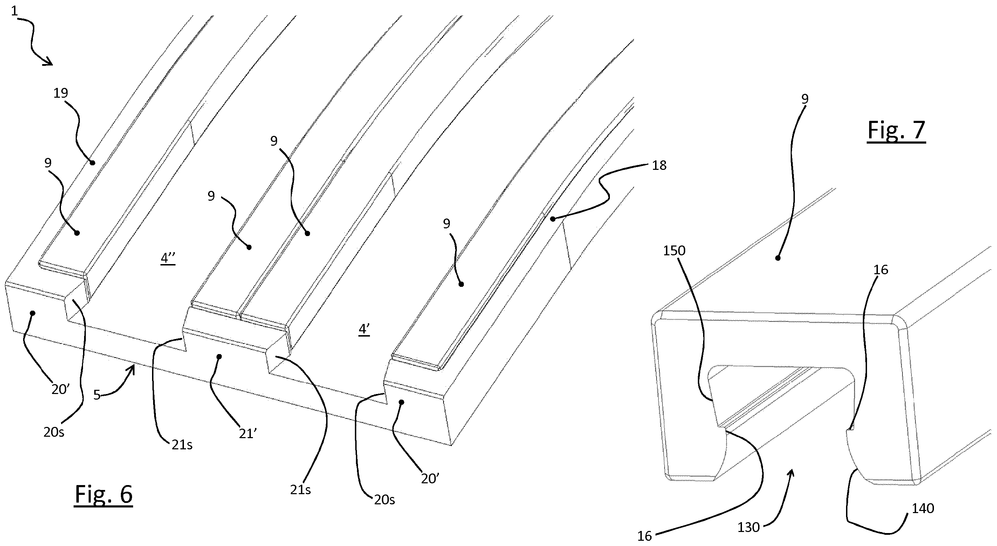

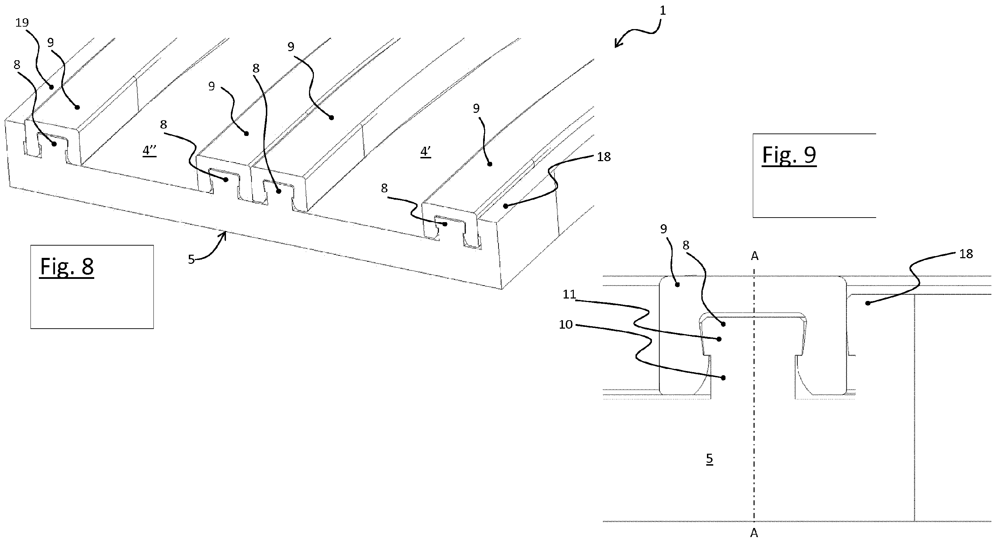

The figures from Fig. 6 to Fig. 9 refer to a double guide track bend segment according to another embodiment of the present invention.

The main differences between the bend segment of the figures from Fig. 6 to Fig. 9 and the bend segment of the figures from Fig. 1 to Fig. 5 previously described consist in the following.

The linings 9, and particularly the seat 130 of the linings 9 for receiving the rail portion 8, has a different shape. In greater detail, the seat 130 of the linings 9 still comprises a lower seat portion 140 with cross section of size that (generically) corresponds to that of the stem 10 of the rail portion 8, and a upper seat portion 150 having a size corresponding to that of the head 11 of the rail portion 8, with two shoulders 16 (complementary to the shoulders 12 of the rail portion 8) between the lower seat portion 140 and the upper seat portion 150. The lower seat portion 140 of the seat 130 has arc walls that define a flaring for easing the insertion of the rail portion 8 in the seat 130.

Unlike the previous embodiment, no spacer analogous to the spacer 17 of the previous embodiment is provided in the base portion 5 between the rail portion 8 of the second guide rail 3' of the first pair of guide rails 2', 3', and the rail portion 8 of the first guide rail 2" of the second pair of guide rails 2", 3" (generally, in case the bend segment comprises more than two guide tracks, no spacers are provided between each second guide rail of a pair of guide rails and each first guide rail of a pair of guide rails that are radially more external). This is due to the different shape (in cross section) of the linings 9, which is no more an isosceles trapezoid, but rather it is rectangular, with vertical side walls instead of slanted side walls.

End buttresses 20', 21' similar to the end buttresses 20, 21 of the previous embodiment are formed in the base portion 5 as end enlargements of the rail portions 8 and of the inner end wall 18 and external end wall 19, and have a different shape, with guide roundings 20s, 21s for the conveyor chains or mats at the entrance in the respective grooves 4', 4"; in this way, a flaring input section to the grooves 4', 4" is defined.

As it can be noted by observing the figures of the two embodiments previously described, all the linings 9 to be applied to the rail portions 8 that are a single piece with the base portion 5 are identical to each other and are interchangeable. This has the advantage of reducing the number of components that are different to each other which constitute the generic bend segment, and thus of simplifying the management of a components storehouse.

In the two exemplary embodiments which will be soon presented, the linings to be applied to the rail portions 8 which are a single piece with the base portion 5 have instead different shapes depending on they are linings defining the first guide rail 2' of the first pair of guide rails 2', 3' or defining the second guide rail 3" of the second pair of guide rails 2", 3" of the bend segment 1 *(i.e.,* the first guide rail of the pair of guide rails which define the guide track that is radially more internal of the bend segment or the second guide rail of the pair of guide rails which define the guide track that is radially more external of the bend segment), or they are linings for the middle guide rails (such as the second guide rail 3' of the first pair of guide rail 2', 3' or the first guide rail 2" of the second pair of guide rails 2", 3").

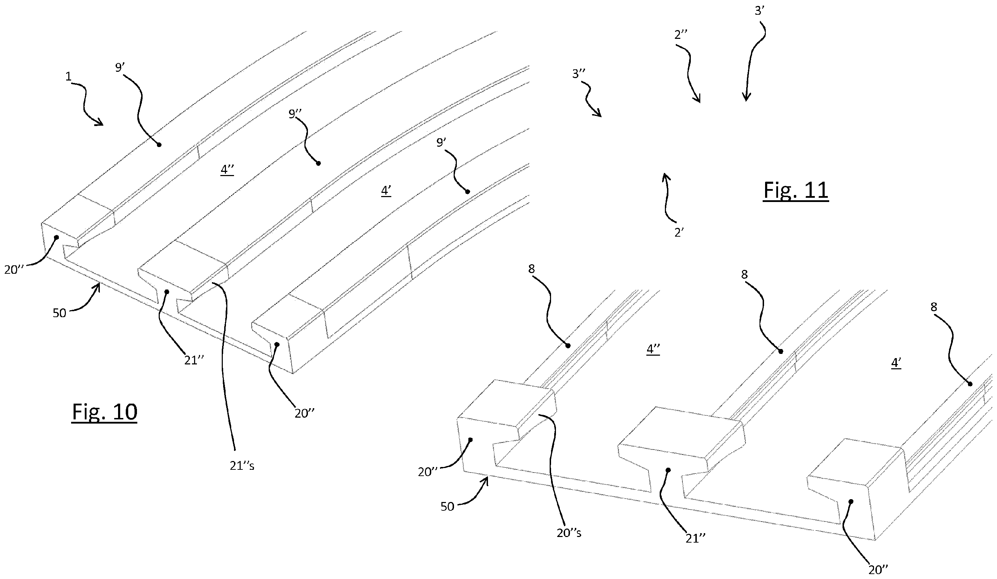

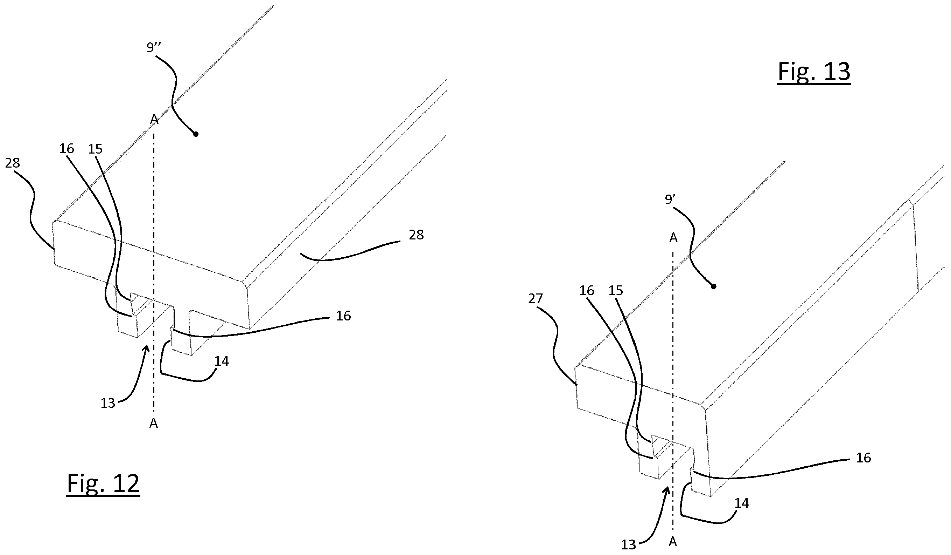

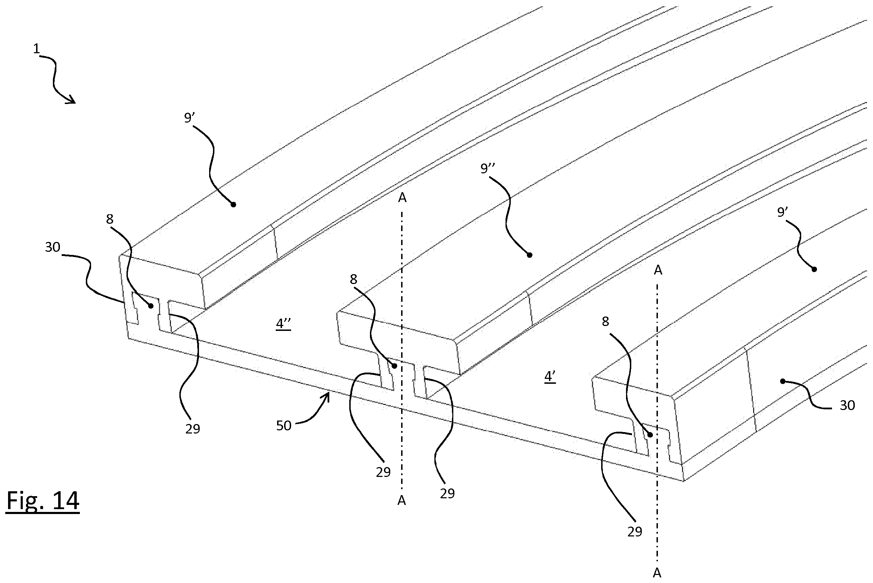

With reference to the figures from Fig. 10 to Fig. 14, an embodiment of the bend segment 1 is illustrated, in which the base portion 50 comprises, between the first groove 4' (radially more internal) and the second groove 4" (radially more external) a single rail portion 8 that is a single piece with the base portion 50, which constitutes a single and common rail portion for the second guide rail 3' of the first pair of guide rails 2', 3' and for the first guide rail 2" of the second pair of guide rails 2", 3". The linings for the guide rails of the bend segment 1 comprise a pair of first linings 9', identical to each other, that can be applied (like the linings 9 of the previous embodiments) to the rail portion 8 of the first guide rail 2' of the first pair of guide rails 2', 3' and to the rail portion 8 of the second guide rail 3" of the second guide rail 2", 3". The linings for the guide rails further comprise a second lining 9", different from the first linings 9', that can be applied to the only common rail portion 8 for the second guide rail 3' of the first pair of guide rails 2', 3' and for the first guide rail 2" of the second pair of guide rails 2", 3". The first lining 9' comprises a coupling portion with the rail portion 8, in which the seat 13 is formed, and a roof protrusion 27 which protrudes from a side of the coupling portion for all the length of the first lining 9'. Also the second lining 9" comprises a coupling portion with the rail portion 8, in which the seat 13 is formed, and two roof protrusions 28 which protrude from one side and the other side of the coupling portion for all the length of the second lining 9".

Another difference with respect to the previously described embodiments is that the base portion 50 does not comprise an internal end wall and does not comprise an external end wall similar to the end walls 18 and 19 of the previous embodiments. Vertical walls 30 of the first linings 9' define also internal and external end walls of the bend segment 1.

Once applied to the respective rail portions 8, the first 9' and second 9" linings define grooves 4' and 4" with an upside down "T" shape cross section, with undercut grooves 29 on both sides.

Also the end buttresses 20", 21" formed in the base portion 50 as end enlargements of the rail portions 8 have a different shape, in conformity with the shape of the linings 9', 9" and of the grooves 4', 4" which are defined in the bend segment 1, with guide roundings 20"s, 21"s (for the conveyor chains or mats at the entrance in the respective grooves 4', 4") both in longitudinal and vertical directions.

The first lining 9' may be mounted both on the more internal rail portion 8 and in the more external rail portion 8 of the base portion 50, being sufficient to overturn it. The second lining 9" may instead be mounted only on common middle rail portions 8 for the radially adjacent guide rails pairs.

In the embodiment previously described, the linings 9 or 9', 9" were provided with seats 13 or 130 for coupling to the rail portions 8 formed in a single piece with the base portion 5 or 50. In other words, for the mounting of the linings 9 or 9', 9" to the base portion 5 or 50 male coupling means (*i.e.,* the rail portions 8) were provided on the base portion 5 or 50 which were conjugate and adapted to cooperate with female coupling means *(i.e.,* the seats 13 or 130) on the linings 9 or 9', 9".

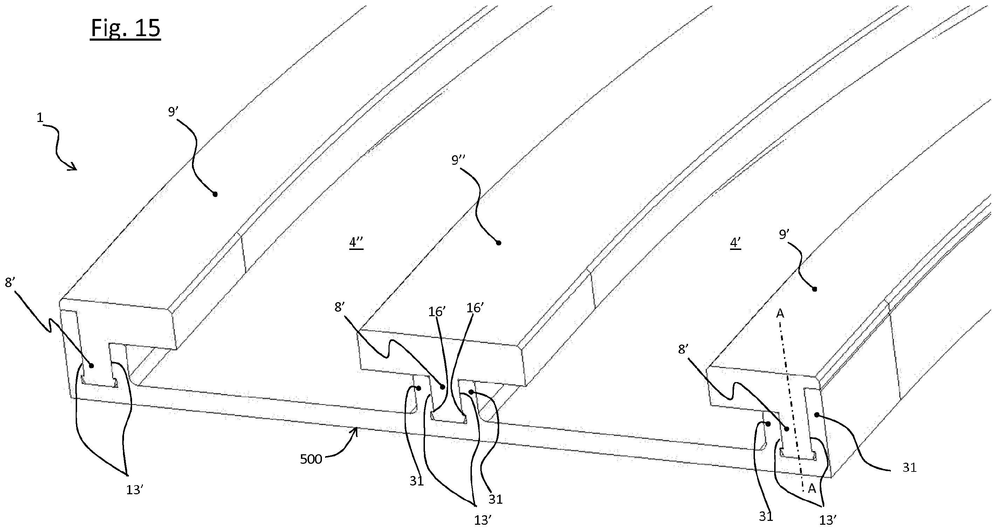

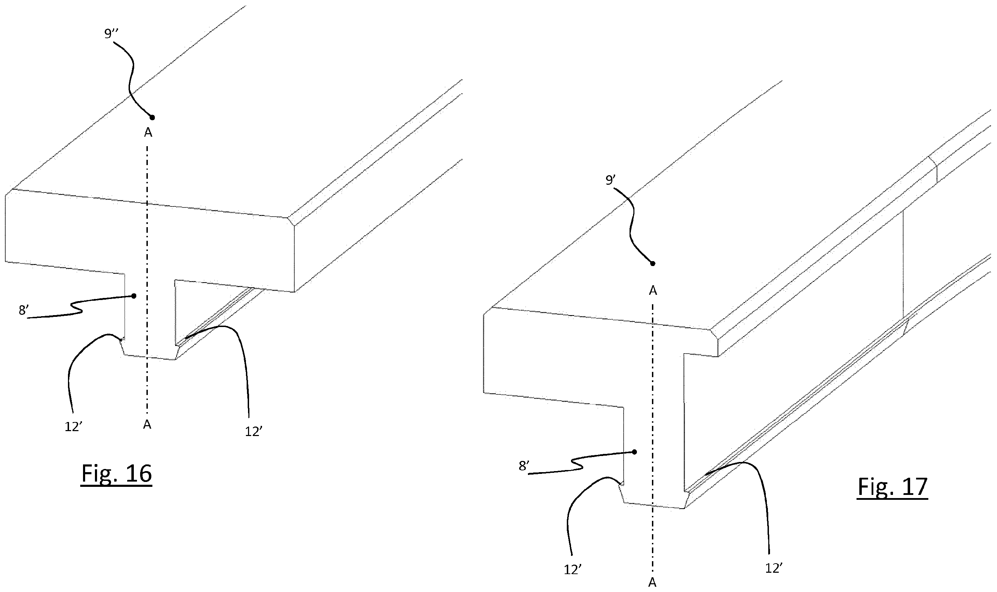

In the embodiment of the figures from Fig. 15 to Fig. 17, which is similar to the embodiment of the figures from Fig. 10 to Fig. 14 with respect to the rest, the arrangement of the male and female coupling means is inverted: the first 9' and second 9" linings are formed in such a way to have male coupling elements 8' similar to the rail portions 8 (which are a single piece with the base 5 or 50) of the previous embodiments, adapted to snap-fit into respective conjugate seats 13' formed in the base portion 500. In other words, on the base portion 500, the rail portions 8 of the preceding embodiments, which constituted male coupling elements, are replaced with seats 13' defined by pairs of rails 31 which are formed in a single piece with the base portion 500 and that define, between each pair of rails 31, a seat 13' for receiving the male coupling element 8' of a respective lining 9' or 9". The male coupling elements 8' comprise (in the same way as the rail portions 8 of the previous embodiments) symmetrical shoulders 12' that define teeth, and the seats 13' comprise, in the same way as the seat 13, symmetrical shoulders 16' that are conjugated with the shoulders 12'. The shoulders 16' faces toward the symmetrical axis A - A.

Summarizing, according to the embodiments of the present invention, the linings 9, 9', 9" can be advantageously removably applied to (respective portions of) the base portion 5, 50, 500 through a snap-fit coupling between first coupling means located on the linings 9, 9', 9" and second coupling means located on the base portion 5, 50, 500.

The first coupling means can be male coupling means - such as the male coupling elements 8' of the embodiment of the invention illustrated in the figures from Fig. 15 to Fig. 17 - and the second coupling means can be female coupling means - such as the seat 13' defined by the walls of the rails 31 of the embodiment of the invention illustrated in the figures from Fig. 15 to Fig. 17. Alternatively, the first coupling means can be female coupling means - such as the seat 13 defined by walls formed in the lining 9 of the embodiments of the invention illustrated in the figures from Fig. 1 to Fig. 9 or the seat 130 defined by walls formed in the linings 9', 9" of the embodiment of the invention illustrated in the figures from Fig. 10 to Fig. 14 - and the second coupling means can be male coupling means - such as the rail portion 8 of the embodiments of the invention illustrated in the figures from Fig. 1 to Fig. 14.

In all the embodiments of the invention herein described, the female coupling means - *i.e.,* the seat 13' defined by the walls of the rails 31 or the seats 13, 130 defined by walls formed in the lining 9 - are configured to have a seat defined by walls that are flexible. In this way, the walls of the seat can elastically flex *(i.e.,* bend apart) so as to enlarge the entering opening of the seat to allow the male coupling means - *i.e.,* the rail portion 8 or the male coupling elements 8' - to be received into the seat. This seat entering opening enlargement is caused by the vertical pressure exerted by pushing the lining 9 or 9' or 9" against the base portion 5, 50, 500, which causes in turn the flexing of the walls defining the seat 13' or 13. Once the rail portion 8 or the male coupling elements 8' is penetrated and received into the seat 13', 13 or 130, said walls close with a snap firmly keeping the received rail portion 8 or male coupling element 8' into the seat 13', 13 or 130.

It will be apparent to the skilled technician that the invention is not limited to the exemplary described embodiments, and that several variants are possible even remaining in the scope of the invention as defined in the following claims.

For example, in possible alternative embodiments, or in variations of the embodiments previously described, the linings can be provided only for the radially more internal guide rails of the pairs of guide rails defining the guide tracks of the bend segment, *i.e.,* for the first guide rails 2', 2" of the pairs of guide rails 2', 3' and 2", 3", which in use are subjected to the highest wear and which consequently need to be substituted from time to time. The most external guide rails, *i.e.,* the second guide rails 3', 3", may be not provided with lining and exclusively realized in the material which constitutes the base portion of the bend segment.

In possible alternative embodiments, or in variations of the embodiments previously described, the number of shoulders (teeth) formed on the male coupling means (such as the teeth 12 of the rail portion 8 formed in a single piece with the base portion) may be, instead of only a pair (a tooth per side), two or more pairs (*i.e.,* two or more teeth per side), in a vertical sequence, and the number of shoulders formed on the female coupling means (such as the shoulders 16 of the seats 13 of the lining profiles 9) may be equal to the number of teeth.

In possible embodiments, the end buttresses 20, 21, or 20', 21', or 20", 21" may be provided at only one of the ends of the bend segment, particularly at the end of the bend segment that, considering the travelling direction of the guide tracks by the conveyor chains, correspond to the exit from the bend segment (indeed, the stresses exerted by the chains on the linings tend to push them in the movement direction of the conveyor chains).

## Claims

1. A bend segment (1) for a conveyor of articles, having at least one guide track (4',4") extending bent for guiding a conveyor chain or mat along a curve, the bend segment comprising a base portion (5; 50; 500) and at least one pair of guide rails comprising a first guide rail (2',2") and a second guide rail (3',3") defining therebetween said at least one guide track (4',4"), said first guide rail (2',2") extending concentrically to said second guide rail (3',3") and being more internal with respect to a center of curvature (C) of the guide track (4',4"), wherein at least said first guide rail (2',2") comprises a respective lining profile (9; 9', 9") applicable and applied to the base portion (5; 50; 500) for defining the first guide rail (2',2"), and wherein said lining profile (9; 9', 9") comprises first coupling means (8'; 13), male or female, and said base portion (5; 50; 500) comprises, in correspondence of said first guide rail (2',2"), second coupling means (13'; 8), respectively female or male, conjugate and adapted to cooperate with said first coupling means (8'; 13) of the lining profile (9; 9', 9") for forming, in particular by pressure onto the lining profile (9; 9', 9") against the base portion (5; 50; 500), a snap-fit coupling, said first and second coupling means being symmetrical with respect to a respective symmetry axis (A-A),
**characterized in that** said base portion (5; 50; 500) comprises end buttresses (20, 21; 20', 21'; 20", 21") at at least one of the ends of said at least one guide track (4',4") adapted to stop in position said lining profile (9; 9', 9") applied to the base portion (5; 50; 500) preventing a sliding of the lining profile (9; 9', 9") relative to the base portion (5; 50; 500).

2. The bend segment of claim 1, wherein the respective lining profile is removably applied to the base portion for defining the first guide rail.

3. The bend segment of claims 1 or 2, wherein one of the first or second coupling means comprises a receiving seat, wherein the receiving seat forms the female coupling means, in particular a female coupling element of a pair of coupling elements having conjugate male-female shapes, wherein the other of the first or second coupling means forms the male conjugate coupling means, in particular a male conjugating element of the pair of coupling elements.

4. The bend segment of claim 3, wherein side walls of the receiving seat are flexible such that the side walls elastically flex and open outwardly to allow the male coupling element to penetrate in the receiving seat.

5. The bend segment of claim 1, wherein:
- said lining profile (9; 9', 9") having said first female coupling means (13), or
- said base portion (5; 50; 500), in correspondence of said first guide rail (2',2"), having said second female coupling means (13')
comprises wall elements defining a seat (13; 13'), said wall elements being flexible in such a way to elastically flex and enlarge an entering opening of said seat (13; 13') to allow said second or first male coupling means (8, 13') to be received into the seat (13; 13').

6. The bend segment according to any one of claims 1 - 5, wherein said base portion (5; 50; 500) and said lining profile (9; 9', 9") are formed of a same material.

7. The bend segment according to any one of claims 1 - 5, wherein said base portion (5; 50; 500) is formed of a first material and said lining profile (9; 9', 9") is formed of a second, different material, particularly a second material having a friction coefficient lower than that of the first material.

8. The bend segment according to any one of the preceding claims, wherein said second guide rail (3',3") is formed in a single piece with and of the same material as the base portion (5; 50; 500).

9. The bend segment (1) of any claim from 1 to 7, wherein also said second guide rail (3',3") comprises a respective lining profile (9; 9', 9") applicable and applied to the base portion (5; 50; 500) for defining the second guide rail (3',3"), and wherein said lining profile (9; 9', 9") of the second guide rail (3',3") comprises first coupling means (8'; 13), male or female, and said base portion (5; 50; 500) comprises, in correspondence of the second guide rail (3',3"), second coupling means (13'; 8), respectively female or male, conjugate and adapted to cooperate with said first coupling means (8'; 13) of the lining profile (9; 9', 9") of the second guide rail (3',3") for forming, in particular by pressure onto the lining profile (9; 9', 9") against the base portion (5; 50; 500), a snap-fit coupling, said first and second coupling means being symmetrical with respect to a respective symmetry axis (A-A).

10. The bend segment of claim 9, wherein the respective lining profile (9, 9', 9") is removably applied to the base portion (5; 50; 500) for defining the second guide rail (3', 3"), preferably wherein one of the first or second coupling means comprises a receiving seat, wherein the receiving seat forms the female coupling means, in particular a female coupling element of a pair of coupling elements having conjugate male-female shapes, wherein the other of the first or second coupling means (8; 8'; 13; 13') forms the male conjugate coupling means, in particular a male conjugating element of the pair of coupling elements, more preferably wherein side walls of the receiving seat are flexible such that the side walls elastically flex and open outwardly to allow the male coupling element to penetrate in the receiving seat.

11. The bend segment of claim 9, wherein:
- said lining profile (9; 9', 9") having said first female coupling means (13), or
- said base portion (5; 50; 500), in correspondence of said second guide rail (3',3"), having said second female coupling means (13')
comprises wall elements defining a seat (13; 13'), said wall elements being flexible in such a way to elastically flex and enlarge an entering opening of said seat (13; 13') to allow said second or first male coupling means (8, 13') to be received into the seat (13; 13').

12. The bend segment (1) of any one of the preceding claims, wherein said at least one guide track (4',4") comprises at least a first guide track (4') and a second guide track (4"), the second guide track (4") being radially more external of the first guide track (4') with respect to the center of curvature (C), and wherein the lining profile (9") of the second guide rail (3',3") of the first guide track (4') also forms the lining profile (9") of the first guide rail (2") of the second guide track (4").

13. The bend segment according to any one of the preceding claims, wherein said first coupling means (8'; 13), male or female, of said lining profile (9; 9', 9") comprises at least one pair of teeth (12') symmetrical with respect to said symmetry axis (A-A) or pair of shoulders (16) symmetrical with respect to said symmetry axis (A) formed in said seat (13) , and said second coupling means (13'; 8), female or male, of the base portion (5; 50; 500), conjugate and adapted to cooperate with said first coupling means (8'; 13), comprises at least one pair of shoulders (16') symmetrical with respect to said symmetry axis (A-A) or pair of teeth (12) symmetrical with respect to said symmetry axis (A-A), in particular wherein the shoulders of the at least one pair of shoulders (16; 16') face toward said symmetry axis (A-A).

14. A method for assembling a bend segment (1) according to any one among the preceding claims, comprising:
- providing said base portion (5; 50; 500) and said lining profile (9; 9', 9");
- applying the lining profile (9; 9', 9") to the base portion (5; 50; 500) by:
- positioning the lining profile (9; 9', 9") on the base portion (5; 50; 500) in such a way that said first coupling means (8'; 13), male or female, of said lining profile (9; 9', 9") is above said second coupling means (13'; 8), female or male, of the base portion (5; 50; 500);
- exerting a vertical pressure on the lining profile (9; 9', 9") against the base portion (5; 50; 500), causing said wall elements to elastically flex and enlarge the entering opening of said seat (13; 13') for allowing said second or first male coupling means (8, 13') to penetrate into the seat (13; 13').

## Patentansprüche

1. Krümmungsabschnitt (1) für eine Fördervorrichtung für Gegenstände, mit mindestens einer Führungsbahn (4', 4"), die gekrümmt verläuft, um eine Förderkette oder -matte entlang einer Kurve zu führen, wobei der Krümmungsabschnitt einen Basisabschnitt (5; 50; 500) und mindestens ein Paar Führungsschienen umfasst, die eine erste Führungsschiene (2', 2") und eine zweite Führungsschiene (3', 3") umfassen, die sich zwischen der mindestens einen Führungsbahn (4', 4") definieren, wobei die erste Führungsschiene (2', 2") konzentrisch zu der zweiten Führungsschiene (3', 3") verläuft und in Bezug auf einen Krümmungsmittelpunkt (C) der Führungsbahn (4', 4") weiter innen liegt, wobei zumindest die erste Führungsschiene (2', 2") ein jeweiliges Auskleidungsprofil (9; 9', 9") umfasst, das an dem Basisabschnitt (5; 50; 500) anbringbar und angebracht ist, um die erste Führungsschiene (2', 2") zu definieren, und wobei das Auskleidungsprofil (9; 9', 9") erste Kopplungsmittel (8'; 13) umfasst, die männlich oder weiblich sind, und der Basisabschnitt (5; 50; 500) in Übereinstimmung mit der ersten Führungsschiene (2', 2") zweite Kopplungsmittel (13'; 8) umfasst, die weiblich bzw. männlich sind, konjugiert und so ausgelegt, dass sie mit den ersten Kopplungsmitteln (8'; 13) des Auskleidungsprofils (9; 9', 9") zusammenwirken, zum Ausbilden, insbesondere durch Druck auf das Auskleidungsprofil (9; 9', 9") gegen den Basisabschnitt (5; 50; 500), einer Schnappverbindung, wobei die ersten und zweiten Verbindungsmittel symmetrisch zu einer jeweiligen Symmetrieachse (A-A) sind,
**dadurch gekennzeichnet, dass** der Basisabschnitt (5; 50; 500) an mindestens einem der Enden der mindestens einen Führungsschiene (4', 4") Endstreben (20, 21; 20', 21'; 20", 21") umfasst, die dazu ausgelegt sind, das an den Basisabschnitt (5; 50; 500) angelegte Auskleidungsprofil (9; 9', 9") in seiner Position zu arretieren, um ein Gleiten des Auskleidungsprofils (9; 9', 9") relativ zum Basisabschnitt (5; 50; 500) zu verhindern.

2. Krümmungsabschnitt nach Anspruch 1, wobei das jeweilige Auskleidungsprofil zur Bildung der ersten Führungsschiene lösbar auf dem Basisabschnitt angebracht ist.

3. Krümmungsabschnitt nach Anspruch 1 oder 2, wobei eines der ersten oder zweiten Kopplungsmittel einen Aufnahmesitz aufweist, wobei der Aufnahmesitz das weibliche Kopplungsmittel bildet, insbesondere ein weibliches Kopplungsglied eines Paares von Kopplungsgliedern mit konjugierten männlich-weiblichen Formen, wobei das andere der ersten oder zweiten Kopplungsmittel das männliche konjugierte Kopplungsmittel bildet, insbesondere ein männliches konjugierendes Element des Paares von Kopplungsgliedern.

4. Krümmungsabschnitt nach Anspruch 3, wobei die Seitenwände des Aufnahmesitzes flexibel sind, so dass sich die Seitenwände elastisch biegen und nach außen öffnen, damit das männliche Kopplungsglied in den Aufnahmesitz eindringen kann.

5. Krümmungsabschnitt nach Anspruch 1, wobei:
- das Auskleidungsprofil (9; 9', 9"), der das erste weibliche Kopplungsmittel (13) aufweist, oder
- der Basisabschnitt (5; 50; 500) in Übereinstimmung mit der ersten Führungsschiene (2', 2"), welche das zweite weibliche Kopplungsmittel (13') aufweist,
Wandelemente umfasst, die einen Sitz (13; 13') definieren, wobei die Wandelemente derart flexibel sind, dass sie sich elastisch biegen und eine Eintrittsöffnung des Sitzes (13; 13') vergrößern, um zu ermöglichen, dass das zweite oder erste männliche Kopplungsmittel (8, 13') in dem Sitz (13; 13') aufgenommen wird.

6. Krümmungsabschnitt nach einem der Ansprüche 1 bis 5, wobei der Basisabschnitt (5; 50; 500) und das Auskleidungsprofil (9; 9', 9") aus demselben Material bestehen.

7. Krümmungsabschnitt nach einem der Ansprüche 1 bis 5, wobei der Basisabschnitt (5; 50; 500) aus einem ersten Material und das Auskleidungsprofil (9; 9', 9") aus einem zweiten, anderen Material, insbesondere einem zweiten Material mit einem niedrigeren Reibungskoeffizienten als dem des ersten Materials, gebildet wird.

8. Krümmungsabschnitt nach einem der vorhergehenden Ansprüche, wobei die zweite Führungsschiene (3', 3") in einem einzigen Stück mit dem Basisabschnitt (5; 50; 500) und aus demselben Material wie dieses gebildet wird.

9. Krümmungsabschnitt (1) nach einem der Ansprüche 1 bis 7, wobei auch die zweite Führungsschiene (3', 3") ein entsprechendes Auskleidungsprofil (9; 9', 9") umfasst, das an dem Basisabschnitt (5; 50; 500) zur Bildung der zweiten Führungsschiene (3', 3") anbringbar und angebracht ist, und wobei das Auskleidungsprofil (9; 9', 9") der zweiten Führungsschiene (3', 3") erste Kopplungsmittel (8'; 13), die männlich oder weiblich sind, umfasst, und der Basisabschnitt (5; 50; 500) in Übereinstimmung mit der zweiten Führungsschiene (3', 3") zweite, weibliche bzw. männliche Kopplungsmittel (13'; 8) aufweist, die konjugiert und so angepasst sind, dass sie mit den ersten Kopplungsmitteln (8'; 13) des Auskleidungsprofils (9; 9', 9") der zweiten Führungsschiene (3', 3") zusammenwirken, um insbesondere durch Druck auf das Auskleidungsprofil (9; 9', 9") gegen den Basisabschnitt (5; 50; 500) eine Schnappverbindung zu bilden, wobei die ersten und zweiten Kopplungsmittel symmetrisch zu einer jeweiligen Symmetrieachse (A-A) sind.

10. Krümmungsabschnitt nach Anspruch 9, wobei das jeweilige Auskleidungsprofil (9; 9', 9") abnehmbar an dem Basisabschnitt (5; 50; 500) angebracht ist, um die zweite Führungsschiene (3', 3") zu definieren, wobei vorzugsweise eines der ersten oder zweiten Kopplungsmittel einen Aufnahmesitz umfasst, wobei der Aufnahmesitz das weibliche Kopplungsmittel, insbesondere ein weibliches Kopplungsglied eines Paares von Kopplungsgliedern mit konjugierten männlich-weiblichen Formen, bildet, wobei das andere der ersten oder zweiten Kopplungsmittel (8; 8'; 13; 13') das männliche konjugierte Kopplungsmittel, insbesondere ein männliches konjugierendes Element des Paares von Kopplungsgliedern, bildet, wobei vorzugsweise die Seitenwände des Aufnahmesitzes flexibel sind, so dass sich die Seitenwände elastisch biegen und nach außen öffnen, um dem männlichen Kopplungsglied zu ermöglichen, in den Aufnahmesitz einzudringen.

11. Krümmungsabschnitt nach Anspruch 9, wobei:
- das Auskleidungsprofil (9; 9', 9"), der das erste weibliche Kopplungsmittel (13) aufweist, oder
- der Basisabschnitt (5; 50; 500) in Übereinstimmung mit der zweiten Führungsschiene (3', 3"), der das zweite weibliche Kopplungsmittel (13') aufweist,
Wandelemente umfasst, die einen Sitz (13; 13') definieren, wobei die Wandelemente derart flexibel sind, dass sie sich elastisch biegen und eine Eintrittsöffnung des Sitzes (13; 13') vergrößern, um zu ermöglichen, dass das zweite oder erste männliche Kopplungsmittel (8, 13') in dem Sitz (13; 13') aufgenommen wird.

12. Krümmungsabschnitt (1) nach einem der vorhergehenden Ansprüche, wobei die mindestens eine Führungsbahn (4', 4") mindestens eine erste Führungsbahn (4') und eine zweite Führungsbahn (4") umfasst, wobei die zweite Führungsbahn (4") in Bezug auf den Krümmungsmittelpunkt (C) radial weiter außerhalb der ersten Führungsbahn (4') liegt, und wobei das Auskleidungsprofil (9") der zweiten Führungsschiene (3', 3") der ersten Führungsbahn (4') auch das Auskleidungsprofil (9") der ersten Führungsschiene (2") der zweiten Führungsbahn (4") bildet.

13. Krümmungsabschnitt nach einem der vorstehenden Ansprüche, wobei das erste Kopplungsmittel (8'; 13), männlich oder weiblich, des Auskleidungsprofils (9; 9', 9") mindestens ein Paar Zähne (12') umfasst, die symmetrisch zu der Symmetrieachse (A-A) sind, oder ein Paar Absätze (16), die symmetrisch zu der Symmetrieachse (A) sind und in dem Sitz (13) ausgebildet sind, und das zweite Kopplungsmittel (13'; 8), das weiblich oder männlich ist, des Basisabschnitts (5; 50; 500) konjugiert und zum Zusammenwirken mit den ersten Kopplungsmitteln (8'; 13) ausgerichtet, mindestens ein Paar Absätze (16'), die symmetrisch zu der Symmetrieachse (A-A) sind oder ein Paar Zähne (12) aufweist, die symmetrisch zu der Symmetrieachse (A-A) sind, wobei insbesondere die Absätze des mindestens einen Paares von Absätzen (16; 16') zu der Symmetrieachse (A-A) hin ausgerichtet sind.

14. Verfahren zum Zusammenbau eines Krümmungsabschnitts (1) nach einem der vorhergehenden Ansprüche, welches umfasst:
- Bereitstellen des Basisabschnitts (5; 50; 500) und des Auskleidungsprofils (9; 9', 9");
- Anbringen des Auskleidungsprofils (9; 9', 9") auf den Basisabschnitt (5, 50, 500) durch:
- Positionierung des Auskleidungsprofils (9; 9', 9") auf dem Basisabschnitt (5, 50, 500) derart, dass das erste Kopplungsmittel (8'; 13), männlich oder weiblich, des Auskleidungsprofils (9; 9', 9") über dem zweiten Kopplungsmittel (13'; 8), weiblich oder männlich, des Basisabschnitts (5, 50, 500) liegt;
- Ausüben eines vertikalen Drucks auf das Auskleidungsprofil (9; 9', 9") gegen den Basisabschnitt (5; 50; 500), wodurch sich die Wandelemente elastisch biegen und die Eintrittsöffnung des Sitzes (13; 13') sich vergrößern, um das Eindringen des zweiten oder ersten männlichen Kopplungsmittels (8, 13') in den Sitz (13; 13') zu ermöglichen.

## Revendications

1. Un segment de courbure (1) pour un convoyeur d'articles, ayant au moins une piste de guidage (4', 4") s'étendant courbée pour guider une chaîne ou un tapis de convoyeur le long d'une courbe, le segment de courbure comprenant une partie de base (5 ; 50 ; 500) et au moins une paire de rails de guidage comprenant un premier rail de guidage (2', 2") et un second rail de guidage (3', 3") définissant entre eux ladite au moins une piste de guidage (4', 4"), ledit premier rail de guidage (2', 2") s'étendant concentriquement audit second rail de guidage (3', 3") et étant plus interne par rapport à un centre de courbure (C) de la piste de guidage (4', 4"), dans lequel au moins ledit premier rail de guidage (2', 2") comprend un profil de revêtement respectif (9 ; 9', 9") applicable et appliqué à la partie de base (5 ; 50 ; 500) pour définir le premier rail de guidage (2', 2"), et dans lequel ledit profil de revêtement (9 ; 9', 9") comprend des premiers moyens de couplage (8' ; 13), mâles ou femelles, et ladite partie de base (5 ; 50 ; 500) comprend, en correspondance dudit premier rail de guidage (2', 2"), des seconds moyens de couplage (13' ; 8), respectivement femelles ou mâles, conjugués et adaptés pour coopérer avec lesdits premiers moyens de couplage (8' ; 13) du profil de revêtement (9 ; 9', 9") pour former, en particulier par pression sur le profil de revêtement (9 ; 9', 9") contre la partie de base (5 ; 50 ; 500), un couplage par encliquetage, lesdits premier et second moyens de couplage étant symétriques par rapport à un axe de symétrie respectif (A-A),
**caractérisé en ce que** ladite partie de base (5 ; 50 ; 500) comprend des contreforts d'extrémité (20, 21 ; 20', 21' ; 20", 21") à au moins une des extrémités dudit au moins un rail de guidage (4', 4") adapté pour arrêter en position ledit profil de revêtement (9 ; 9', 9") appliqué à la partie de base (5 ; 50 ; 500) empêchant un glissement du profil de revêtement (9 ; 9', 9") par rapport à la partie de base (5 ; 50 ; 500).

2. Le segment de courbure de la revendication 1, dans lequel le profil de revêtement respectif est appliqué de manière amovible à la partie de base pour définir le premier rail de guidage.

3. Le segment de courbure selon les revendications 1 ou 2, dans lequel l'un des premier ou deuxième moyens de couplage comprend un siège de réception, dans lequel le siège de réception forme le moyen de couplage femelle, en particulier un élément de couplage femelle d'une paire d'éléments de couplage ayant des formes conjuguées mâle-femelle, dans lequel l'autre des premier ou deuxième moyens de couplage forme le moyen de couplage conjugué mâle, en particulier un élément de conjugaison mâle de la paire d'éléments de couplage.

4. Le segment de courbure selon la revendication 3, dans lequel les parois latérales du siège de réception sont flexibles de sorte que les parois latérales fléchissent élastiquement et s'ouvrent vers l'extérieur pour permettre à l'élément de couplage mâle de pénétrer dans le siège de réception.

5. Le segment de courbure selon la revendication 1, dans lequel :
- ledit profilé de revêtement (9 ; 9', 9") ayant ledit premier moyen de couplage femelle (13), ou
- ladite partie de base (5 ; 50 ; 500) en correspondance avec ledit premier rail de guidage (2', 2"), ayant ledit deuxième moyen de couplage femelle (13')
comprend des éléments de paroi définissant un siège (13 ; 13'), lesdits éléments de paroi étant flexibles de manière à fléchir élastiquement et à élargir une ouverture d'entrée dudit siège (13 ; 13') pour permettre auxdits seconds ou premiers moyens d'accouplement mâles (8, 13') d'être reçus dans le siège (13 ; 13').

6. Le segment de courbure selon l'une quelconque des revendications 1 à 5, dans lequel ladite partie de base (5; 50; 500) et ledit profil de revêtement (9; 9', 9") sont formés d'un même matériau.

7. Le segment de courbure selon l'une quelconque des revendications 1 à 5, dans lequel ladite partie de base (5 ; 50 ; 500) est formée d'un premier matériau et ledit profil de revêtement (9 ; 9', 9") est formé d'un second matériau différent, en particulier un second matériau ayant un coefficient de frottement inférieur à celui du premier matériau.

8. Segment de courbure selon l'une quelconque des revendications précédentes, dans lequel ledit deuxième rail de guidage (3', 3") est formé d'une seule pièce avec et dans le même matériau que la partie de base (5 ; 50 ; 500).

9. Le segment de courbure (1) selon l'une quelconque des revendications 1 à 7, dans lequel ledit deuxième rail de guidage (3', 3") comprend également un profilé de revêtement respectif (9 ; 9', 9") applicable et appliqué à la partie de base (5 ; 50 ; 500) pour définir le deuxième rail de guidage (3', 3"), et dans lequel ledit profilé de revêtement (9 ; 9', 9") du deuxième rail de guidage (3', 3") comprend des premiers moyens de couplage (8' ; 13), mâles ou femelles, et ladite partie de base (5 ; 50 ; 500) comprend, en correspondance du deuxième rail de guidage (3', 3"), des seconds moyens de couplage (13' ; 8), respectivement femelle ou mâle, conjugués et adaptés pour coopérer avec lesdits premiers moyens de couplage (8' ; 13) du profilé de revêtement (9 ; 9', 9") du second rail de guidage (3', 3") pour former, en particulier par pression sur le profilé de revêtement (9 ; 9', 9") contre la partie de base (5 ; 50 ; 500), un couplage par encliquetage, lesdits premier et second moyens de couplage étant symétriques par rapport à un axe de symétrie respectif (A-A).

10. Le segment de courbure selon la revendication 9, dans lequel le profilé de revêtement respectif (9, 9', 9") est appliqué de manière amovible sur la partie de base (5 ; 50 ; 500) pour définir le deuxième rail de guidage (3', 3"), de préférence dans lequel l'un des premier ou deuxième moyens de couplage comprend un siège de réception, dans lequel le siège de réception forme le moyen de couplage femelle, en particulier un élément de couplage femelle d'une paire d'éléments de couplage ayant des formes conjuguées mâle-femelle, dans lequel l'autre des premier ou deuxième moyens de couplage (8 ; 8' ; 13 ; 13') forme le moyen de couplage conjugué mâle, en particulier un élément de conjugaison mâle de la paire d'éléments de couplage, plus préférablement dans lequel les parois latérales du siège de réception sont flexibles de sorte que les parois latérales fléchissent élastiquement et s'ouvrent vers l'extérieur pour permettre à l'élément de couplage mâle de pénétrer dans le siège de réception.

11. Le segment de courbure selon la revendication 9, dans lequel :
- ledit profilé de revêtement (9 ; 9', 9") ayant ledit premier moyen de couplage femelle (13), ou
- ladite partie de base (5 ; 50 ; 500), en correspondance avec ledit deuxième rail de guidage (3', 3"), ayant ledit deuxième moyen d'accouplement femelle (13') comprend des éléments de paroi définissant un siège (13 ; 13'), lesdits éléments de paroi étant flexibles de manière à fléchir élastiquement et à élargir une ouverture d'entrée dudit siège (13 ; 13') pour permettre audit deuxième ou premier moyen d'accouplement mâle (8, 13') d'être reçu dans le siège (13 ; 13').

12. Le segment de courbure (1) selon l'une quelconque des revendications précédentes, dans lequel ledit au moins un rail de guidage (4', 4") comprend au moins un premier rail de guidage (4') et un second rail de guidage (4"), le second rail de guidage (4") étant radialement plus externe que le premier rail de guidage (4') par rapport au centre de courbure (C), et dans lequel le profilé de revêtement (9") du second rail de guidage (3', 3") du premier rail de guidage (4') forme également le profilé de revêtement (9") du premier rail de guidage (2") du second rail de guidage (4").

13. Le segment de courbure selon l'une quelconque des revendications précédentes, dans lequel ledit premier moyen de couplage (8' ; 13), mâle ou femelle, dudit profilé de revêtement (9 ; 9', 9") comprend au moins une paire de dents (12') symétriques par rapport audit axe de symétrie (A-A) ou une paire d'épaulements (16) symétriques par rapport audit axe de symétrie (A) formé dans ledit siège (13), et ledit second moyen de couplage (13' ; 8), femelle ou mâle, de la partie de base (5 ; 50 ; 500), conjugué et adapté pour coopérer avec ledit premier moyen de couplage (8' ; 13), comprend au moins une paire d'épaulements (16') symétriques par rapport audit axe de symétrie (A-A) ou une paire de dents (12) symétriques par rapport audit axe de symétrie (A-A), en particulier dans lequel les épaulements de la au moins une paire d'épaulements (16 ; 16') sont tournés vers ledit axe de symétrie (A-A).

14. Procédé d'assemblage d'un segment de courbure (1) selon l'une quelconque des revendications précédentes, comprenant les étapes consistant à :
- fournir ladite partie de base (5 ; 50 ; 500) et ledit profilé de revêtement (9 ; 9', 9") ;
- appliquer le profil de revêtement (9 ; 9', 9") sur la partie de base (5 ; 50 ; 500) en :
- positionnant le profilé de revêtement (9 ; 9', 9") sur la partie de base (5 ; 50 ; 500) de telle sorte que lesdits premiers moyens de couplage (8' ; 13), mâles ou femelles, dudit profilé de revêtement (9 ; 9', 9") soient au-dessus desdits seconds moyens de couplage (13' ; 8), femelles ou mâles, de la partie de base (5 ; 50 ; 500) ;
- exerçant une pression verticale sur le profilé de revêtement (9 ; 9', 9") contre la partie de base (5 ; 50 ; 500), provoquant la flexion élastique desdits éléments de paroi et l'élargissement de l'ouverture d'entrée dudit siège (13 ; 13') pour permettre auxdits seconds ou premiers moyens de couplage mâles (8, 13') de pénétrer dans le siège (13 ; 13').
